Europäisches Patentamt

European Patent Office

Office européen des brevets

(11) Veröffentlichungsnummer: **0 473 958 B1**

# EUROPÄISCHE PATENTSCHRIFT

(45) Veröffentlichungstag der Patentschrift: **30.11.94**

(51) Int. Cl.⁵: **B30B 11/02**, B30B 9/04

(21) Anmeldenummer: **91113288.4**

(22) Anmeldetag: **08.08.91**

(54) **Verfahren und Vorrichtung zur Herstellung von Tabletten aus Metallpulver und deren Verwendung als Katalysatoren.**

(30) Priorität: **21.08.90 DE 4026351**

(43) Veröffentlichungstag der Anmeldung:
**11.03.92 Patentblatt 92/11**

(45) Bekanntmachung des Hinweises auf die
Patenterteilung:
**30.11.94 Patentblatt 94/48**

(84) Benannte Vertragsstaaten:
**CH DE FR GB IT LI NL**

(56) Entgegenhaltungen:
**GB-A- 1 373 351**
**GB-A- 1 381 493**
**GB-A- 1 441 172**

**DATABASE WPIL Week 9017, Derwent Publications Ltd., London, GB; AN 90-130906(17) & SU-A-1 493 384 (E. NIKITIN) 15. Juli 1989**

**DATABASE WPIL Week 9020, Derwent Publications Ltd., London, GB; AN 90-153908(20) & SU-A-1 519 841 (FORGE PRESS EOUIP.) 7. November 1989**

(73) Patentinhaber: **BAYER AG**

**D-51368 Leverkusen (DE)**

Patentinhaber: **Korsch Maschinenfabrik**
**Breitenbachstrasse 1**
**D-13509 Berlin (DE)**

(72) Erfinder: **Birkenstock, Udo, Dr.**
**Schnepperdelle 2**
**W-4030 Ratingen 8 (DE)**
Erfinder: **Gay, Wolgang, Dipl.-Ing.**
**In der Hildscheid 7**
**W-5068 Odenthal (DE)**
Erfinder: **Korsch, Wolfgang, Dipl.-Ing.**
**Gollancz-Strasse 11**
**W-1000 Berlin 28 (DE)**

(74) Vertreter: **Drope, Rüdiger, Dr. et al**
**c/o Bayer AG**
**Konzernverwaltung RP**
**Patente Konzern**
**D-51368 Leverkusen (DE)**

DATABASE WPIL Week 8907, Derwent Publications Ltd., London, GB; AN 89-051948(07) & JP-A-64 003 077 (KOBE STEEL WORKS) 6. JANUAR 1989

DATABASE WPI Week 7718, Derwent Publications Ltd., London, GB; AN 77-31534Y(18) & JP-A-50 099 987 (MITSUI TOATSU CHEM. IND.)

**Beschreibung**

Die Erfindung bezieht sich auf ein Verfahren und eine Vorrichtung zur Herstellung von Tabletten aus Metallpulver, insbesondere aus hochaktivem Metallpulver, die z.B. als Festbettkatalysatoren in der Chemie eingesetzt werden können. Derartige Festbettkatalysatoren kommen in katalytischen Gas- und Rieselphaseverfahren zum Einsatz, bei denen die Reaktanten durch oder über eine Schüttung aus Katalysatoren geleitet werden. Dies ist z.B. in der DE-A 3 403 973 beschrieben.

Ein Festbettkatalysator weist normalerweise wohldefinierte geometrische Formen auf, z.B. Ringe oder Zylinder. Die zylindrische Form ist die am häufigsten anzutreffende. Von erheblicher Bedeutung ist sowohl die Druckfestigkeit der Formkörper, da eine zu niedrige Druckfestigkeit zum Zerfall der Formkörper und zu einer Kontamination des Reaktionsproduktes führt, als auch eine entsprechend große innere Oberfläche der Formkörper. Die Herstellung solcher Formkörper erfolgt im allgemeinen auf einer Tablettiermaschine unter definiertem hohen Druck. Die Ausgangssubstanz ist dabei Katalysatormaterial als Pulver.

Kommen als Katalysator-Materialien feinverteilte, insbesondere pulverförmige Metalle zum Einsatz, z.B. solche der Gruppe VIII des Periodensystems, so muß die Tablettierung u.a. auch wegen der großen Oberfläche der hochaktiven Pulver in einer sauerstofffreien Atmosphäre erfolgen, um Oberflächenoxidationen zu vermeiden. Derartige Oxidationen sind stark exotherm und daher mit einer hohen Brand- und evtl. Explosionsgefahr verbunden.

Üblicherweise werden die Metallpulver in Form einer wäßrigen Suspension oder eines Schlammes zur Verarbeitung angeliefert. Dann besteht die Herstellung der metallischen Formkörper aus den Schritten
- Trocknung des Metallpulvers unter einer Schutzgasatmosphäre,
- Verpressen des Pulvers auf einer Tablettiermaschine ebenfalls unter einer Schutzgasatmoshäre und
- Lagern der fertigen Tabletten in Wasser oder einer sonstigen Flüssigkeit.

Es stellt sich die Aufgabe, ein vereinfachtes Verfahren zur Herstellung derartiger Formkörper zu entwickeln, bei dem auf die Schutzgasatmosphäre verzichtet werden kann.

Die Lösung der Aufgabe ergibt sich aus den Merkmalen der Patentansprüche 1 und 4.

Der Kern der Erfindung besteht in einer direkten Verarbeitung von metallpulverhaltigen Suspensionen bzw. Schlämmen zu Tabletten bzw. Formkörpern, Durch Naßverpressen der Suspension auf Tablettiermaschinen, insbesondere Exzenterpressen, werden die Formkörper direkt aus der Suspension heraus hergestellt.

In das erfindungsgemäße Verfahren können z.B. Metallpulver eingesetzt werden, die ein oder mehrere Metalle in feinverteilter Form enthalten wie sie z.B. für katalytische Zwecke verwendet werden. Derartige Katalysatoren sind z.B. unter den Bezeichnungen Katalysatoren vom Mohr-Typ und Katalysatoren vom Raney-Typ bekannt, beispielsweise als Platin-Mohr, Palladium-Mohr, Raney-Nickel und Raney-Eisen.

Raney-Katalysatoren werden erhalten, indem aus einer Aluminium-Legierung eines katalytisch aktiven Metalls, z.B. Nickel, das Aluminium mit Alkalilauge in der Hitze herausgelöst wird (s. US-A- 1 563 587). Hierbei wird ein Metallschlamm erhalten, der eine stark zerklüftete und poröse Struktur besitzt und ein Skelett von Metallkristallen aufweist, weshalb diese Katalysatoren auch als Skelett-Katalysatoren bezeichnet werden.

Der häufigste Vertreter dieses Typs ist das Raney-Nickel. Raney-Nickel kann neben der Hauptkomponente Nickel im wesentlichen noch Aluminium und Wasserstoff enthalten. Die Beladung der Raney-Katalysatoren mit Wasserstoff im Zuge ihrer Herstellung begründet ihren Einsatz als Hydrierkatalysatoren und ist für ihre pyrophoren Eigenschaften verantwortlich.

In das erfindungsgemäße Verfahren können gegebenenfalls pyrophore Pulver von beispielsweise Thallium, Vanadium, Chrom, Mangan, Eisen, Kobalt, Titan, Nickel, Kupfer, Zirkonium, Niob, Molybdän, Ruthenium, Rhodium, Palladium, Silber, Hafnium, Tantal, Wolfram, Rhenium, Osmium, Iridium, Platin, Gold und Blei eingesetzt werden. Bevorzugt werden Raney-Katalysatoren in das erfindungsgemäße Verfahren eingesetzt, ganz besonders Nickel-, Kobalt- und/oder Eisen-haltige Raney-Katalysatoren.

Bei pyrophoren Metallpulvern muß dafür gesorgt werden, daß sie nicht dem Luftsauerstoff ausgesetzt werden, d.h. sie dürfen nicht austrocknen und sind immer mit einer Flüssigkeitsschicht, zumeist Wasser, bedeckt zu erhalten.

Da in das erfindungsgemäße Verfahren Suspensionen von Metallpulvern einzusetzen sind, kann man dazu z.B. direkt solche Mischungen aus pyrophoren Metallpulvern und den Luftsauerstoff ausschließenden Flüssigkeiten verwenden.

Als flüssige Phase für einzusetzende Suspensionen kommen insbesondere Wasser, aber auch organische Flüssigkeiten, z.B. Alkohole oder Ketone, oder organische Fette in Betracht. Als zu verpressende Metallpulver kommen insbesondere solche zum Einsatz, die in trockenem, pulverförmigem Zustand, wegen z.B. der Gefahr der Selbstentzündung nicht verarbeitet werden können. Dies trifft z.B. zu auf die Metalle der Gruppe VIII des Periodensystems, vorzugsweise Nickel, Kobalt und Eisen, insbesondere Nickel.

Die Metallpulver für das erfindungsgemäße Verfahren, können z.B. Korndurchmesser von ≦200 $\mu$m, vorzugsweise von ≦150 $\mu$m und insbesondere ≦100 $\mu$m aufweisen. Aus den Suspensionen von solchen Metallpulvern lassen sich erfindungsgemäß direkt amorphe metallische Formkörper mit definierter Härte und definierter innerer Oberfläche pressen. Da während der gesamten Herstellungsschritte sich das zu bearbeitende Material in einer nassen Umgebung befindet, tritt die Oxidationsreaktion nicht ein und eine Schutzgasatmosphäre ist überflüssig.

Als besonders vorteilhaft wird daher die außerordentliche Vereinfachung des Herstellungsverfahrens, also der Fortfall der energieintensiven Trocknung und der Fortfall der Schutzgasatmoshäre herausgestellt.

Weitere vorteilhafte Ausgestaltungen des erfindungsgemäßen Verfahrens und der erfindungsgemäßen Vorrichtung sind aus den Ansprüchen 2 - 10 ersichtlich.

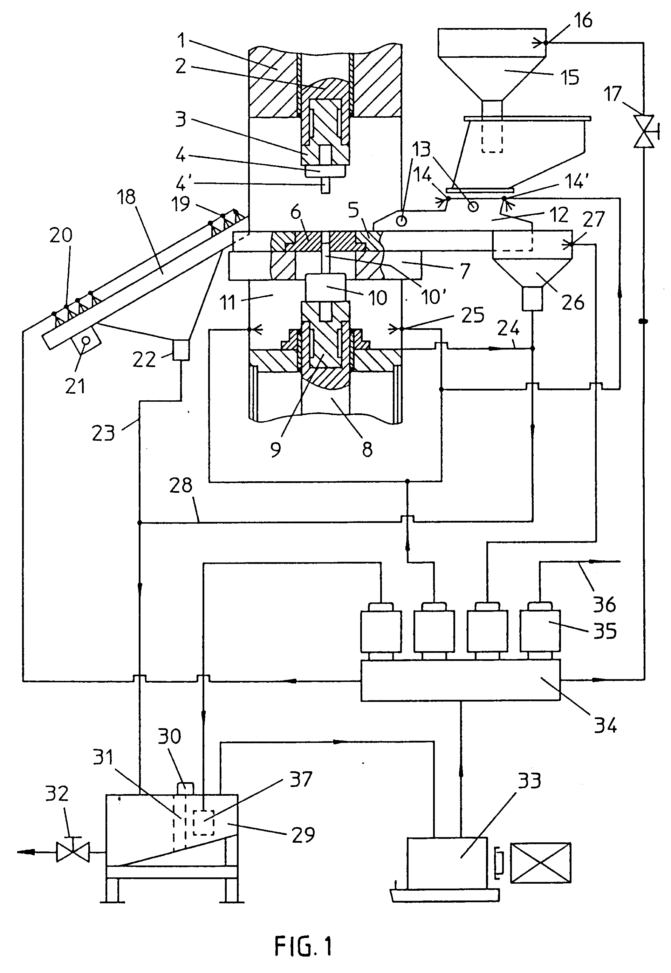

Nachfolgend wird nun eine bevorzugte Vorrichtung zur Durchführung des erfindungsgemäßen Verfahrens anhand der Figur 1 beschrieben. Diese zeigt eine Exzenterpresse zur Herstellung von Raney-Katalysatoren in Tablettenform aus einer wäßrigen Metallsuspension.

Die in Fig. 1 dargestellte Exzenterpresse 1 umfaßt einen Oberkolben 2 zur Aufnahme eines Aufnehmers 3 für einen Oberhalter 4, für ein oberes Presswerkzeug 4', sowie eine Matrizenplatte 5 mit Matrize 6 und darunter befindlichem Schwingtisch 7 sowie einen Unterkolben 8 zur Aufnahme eines Aufnehmers 9 für einen Unterhalter 10 zur Aufnahme des unteren Preßwerkzeuges 10', das in der Matrize 6 geführt ist. Die Preßwerkzeuge 4' und 10' können Mehrfach-Werkzeuge sein, z.B. ein 30-60-fach-Werkzeug zur Herstellung von Tabletten, z.B. mit Durchmessern von 2-10 mm und mit einer Höhe von 2-10 mm und mit oder ohne Facette oder Wölbung. An den Aufnehmern 3 und 9 für den Oberhalter 4 bzw. den Unterhalter 10 sind nicht näher dargestellte Dehnungsmeßstreifen angebracht. Diese sind mit einer nicht näher dargestellten Steuer- und Regeleinrichtung der Exzenterpresse 1 verbunden. Der Bereich unterhalb des Schwingtisches 7 bildet eine Zwischenkammer 11, welche hermetisch verschlossen ist.

Zur Zufuhr der wäßrigen Metallsuspension zur Herstellung von tablettenförmigen Raney-Katalysatoren ist oberhalb der Matrizenplatte 5 ein Füllschuh 12 hin- und herbewegbar angeordnet, der mit zwei Rührwalzen 13 und den Sprühdüsen 14 und 14' ausgerüstet ist und oberhalb dessen sich unter Zwischenschaltung eines Aufgabetrichters 15 ein Materialbehälter 15' mit einer gegebenenfalls örtlich veränderbaren Sprühdüse 16 befindet. Zu dieser führt eine Zuleitung, die mit dem Handventil 17 geöffnet oder geschlossen werden kann.

Auf der dem Füllschuh 12 gegenüberliegenden Seite der Matrizenplatte 5 schließt sich eine Ablaufrutsche 18 für die fertigen tablettenförmigen Raney-Katalysatoren an, welche Flachstrahl-Sprühdüsen 19 zur Vorreinigung und Vollkegel-Sprühdüsen 20 zur Nachreinigung der Tabletten umfaßt und an welcher ein Vibrator 21 zur Austragshilfe angebracht ist. Unterhalb der Ablaufrutsche 18 befindet sich ein Auffangtrichter 22' mit Auffangbehälter 22 für den von den Tabletten abgespülten Schlamm, welcher über eine Rückleitung 23 abgeführt wird. Eine weitere Rückleitung 24 geht von der Zwischenkammer 11 aus, welche ebenfalls mit Sprühdüsen 25 zur Reinigung versehen ist.

Der Exzenterpresse 1 ist ein Sprüh- und Spülwasserkreislauf zugeordnet, der eine Wasserpumpe 33 aufweist, welche Sprühwasser über einen Verteilerblock 34 und Ventile 35 über entsprechende Zuleitungen und das Handventil 17 den einzelnen Sprühdüsen 14, 14', 16, 19, 20, 25 und 27 zuführt. An eines der Ventile 35 schließt sich eine Entsorgungsleitung 36 an. Auf der rückwärtigen Seite des Füllschuhs 12 ist am Ende der Matrizenplatte 5 ein Schlammbehälter 26 mit Sprühdüsen 27 angebracht. Der im Schlammbehälter 26 gesammelte Schlamm wird über eine Rückleitung 28 abgeführt. Die Schlamm-Rückleitungen 23, 24 und 28 sind mit einem Wasser/Schlammbehälter 29 verbunden, der mit einem Schwimmerschalter 30, einer Trennwand 31, einem Ansaugfilter 37 und einem Ablaßhahn 32 versehen ist.

Das Ausgangsprodukt (die Metallpulver-Suspension) wird der Exzenterpresse 1 zur Verpressung zugeführt. Die Zuführung wird vom Füllschuh 12 durchgeführt, der über den Füllbehälter 15 und 15' beschickt wird. Die einzustellende Füllmenge wird über die Oberstempel-Preßkraftanzeige überwacht, ebenso der Flüssigkeitsgehalt der Suspension. Mit den Sprühdüsen 16 werden evtl. Schlammablagerungen im Füllbehälter 15 enfernt und so eine Austrocknung und damit eine exotherme Oxidation von Metallschlammresten verhindert. Der Füllschuh 12 ist auf der Matrizenplatte 5 beweglich angeordnet und füllt während seiner Vorwärtsbewegung die Bohrungen der Matrize 6, von denen in der Figur 1 der Einfachheit halber nur eine dargestellt ist. Zur Intensivierung der Füllung dienen die beiden Rührwalzen 13. Die Vorderkante des Füllschuhs 12 befördert gleichzeitig fertige Preßlinge zur Ablaufrutsche 18. Spezielle Dichtleisten in der Füllschuhlauffläche verhindern den Verschleiß der Matrizenplatte 5 und das übermäßige Austreten von Flüssigkeit und Metallschlamm. Am Füllschuh 12 sind die Sprühdüsen 14 und 14' in Vorwärts- bzw. Rückwärtsrichtung angebracht. In Vorwärtsrichtung werden die fertigen Tabletten angefeuchtet und zusammen mit dem überschüssigen Metallschlamm in Richtung der Tablettenablaufrutsche 18 befördert, in Rückwärtsrichtung wird durch das Befeuchten mittels der Düsen 14 eine Vergleichmäßigung der Füllung in der Matrize 6 erreicht und damit auch Stempelbruch und hoher Stempelverschleiß verhindert. Die hintere Düse 14' spült den abgelagerten Schlamm von der Matrizenplatte 5 in den Auffangbehälter 26. Wegen der nassen Betriebsumgebung ist die Maschine in diesem Bereich wasserfest ausgelegt und die Matrizenplatte 5 ist mit Auffang- und Abtropfleisten ausgerüstet, um mittels der Düsen 27 eine gezielte Rückführung des Schlamms zu ermöglichen.

Im Oberhalter 4 und Unterhalter 10 sind jeweils soviel Einzelstempel befestigt wie die Matrize Bohrungen aufweist. Die Einzelstempel tauchen nach dem Rückfahren des Füllschuhs 12 von oben und unten in die gefüllte Matrize 6 und pressen aus dem Schlamm die Formkörper. Es ist dabei wichtig, daß bestimmte Abstände zwischen der Wandung der einzelnen Matrizenbohrungen und den dazugehörenden Ober- und Unterstempeln eingehalten werden. Es soll erreicht werden, daß während des Preßvorganges das Wasser ohne größeren Verlust an Metallpulver aus der Matrize herausgepreßt wird. Zu große Abstände oder Toleranzen zwischen Matrizenbohrungen und dazugehörendem Stempel, bewirken eine Entleerung der Matrize während des Pressens, zu kleine Toleranzen führen dazu, daß das Wasser nicht aus dem Pressling verdrängt werden kann und somit kein Preßling zustande kommt. Wegen der Inkompressibilität des Wassers können dann auch Stempelbrüche eintreten. Die Toleranzen und Härten der Werkzeuge müssen der zu verpressenden Suspension angepaßt werden. Für wäßrige Nickelpulverschlämme mit Korndurchmessern des Nickels von $\leq 100\ \mu m$ hat sich beispielsweise gezeigt, daß bei Preßwerkzeugen mit einem Durchmesser von 5 mm zylindrische Matrizenbohrungen mit einer Vorweite, z.B. einer solchen von 0,02 mm von Vorteil sind. Die Toleranzen-Oberstempel/Matrize liegen bevorzugt bei max. 0,09 mm, insbesondere bei 0,05 bis 0,07 mm, und die Toleranzen-Unterstempel/Matrize bevorzugt bei 0,07 mm, insbesondere bei 0,04 bis 0,06 mm.

Jedes Stoppen der Preße erfolgt vorzugsweise in der obersten Unterstempel-Position, damit die Matrize 6 entleert ist. Die Lage des Haltepunktes ist wichtig, da die fertigen Preßteile in nicht befeuchtetem Zustand möglichst nicht länger als ca. 30 sec in der Matrize 6 verbleiben sollen. Eine längere Verweildauer in nicht befeuchtetem Zustand kann zum Ausglühen der Preßteile und Zerstörung der gehärteten Matrize 16, der Unterstempel 10' und/oder der Oberstempel 4' führen.

Beim Preßvorgang setzt sich über dem unteren Werkzeug 10, dem Aufnehmer 9 und dem Unterkolben 8 in der Zwischenkammer 11 Metallschlamm ab. Dadurch kann die Unterkolbenführung gefährdet werden. Der Schlamm wird deshalb über einstellbare Sprühdüsen 25 aus der hermetisch verschlossenen Unterkammer 11 herausgespült und über eine Rücklaufleitung 24 dem Wasser/Schlammbehälter 29 zugeführt.

Nach erfolgter Pressung werden die Preßlinge ausgeworfen und von der erneuten Vorwärtsbewegung des Füllschuhs 12 zur Tablettenablaufrutsche 18 befördert. Gleichzeitig wird wieder die Matrize 6 gefüllt.

Für den Einsatz der Tabletten als Katalysatoren in chemischen Verfahren wird eine absolute Sauberkeit von evtl. anhaftendem pulverförmigen Material verlangt. Durch drei Flachstrahldüsen 19, die sich am Anfang der Tablottenablaufrutsche 18 befinden, wird eine Vorreinigung durchgeführt. Über Leitbleche werden die Tabletten der Staustrecke zugeführt. Hier erfolgt die Endreinigung durch vier Vollkegeldüsen 20. Mit Hilfe des Vibrators 21 und der Ablaufrutsche werden die Preßlinge beim Durchlaufen der Rutsche 18 mehrmals gewendet und dadurch ein optimales Reinigungsergebnis erzielt. Es kann z.B. auch eine Schwingsiebrinne oder ähnliche Vorrichtung mit einer Flüssigkeitsspülung eingesetzt werden. Die so gereinigten Tabletten werden anschließend im Wasserbad gelagert.

Der integrierte Sprüh- und Spülwasserkreislauf erfüllt mehrere Zwecke. Es sorgt für die nötige nasse Betriebsumgebung, um eine Selbstentzündung des Metallschlammes durch evtl. Trocknung zu verhindern, er säubert die Maschinenteile von Metallschlamm und bofördert ihn über Rücklaufleitungen in das Sammelgefäß 29, so daß er wieder in den Produktionsprozeß eingeführt werden kann, er dient der Reinigung der fertigen Tabletten und er vermindert den Wasserbedarf ganz wesentlich, da das über den Ansaugfilter 37 gereinigte Spülwasser jeweils erneut verwendet wird.

Durch die Wasserpumpe 33 werden über den Ventilverteilerblock 34 und die Ventile 35 die diversen Sprühdüsen an dem Einfüllbehälter 15, dem Füllschuh 12, dem Sammelbehälter 26, der Zwischenkammer 11 und dar Tablettanablaufrutsche 18 versorgt. Die Zuführung zur Düse 16 am Einfüllbehälter 15 ist durch das Handventil 17 an- und abschaltbar. Die Wasserpumpe 33 fördert aus dem Wasserbehälter 29. Der abgespülte Matallschlamm und das Spülwasser werden über den Auffangbehälter 26 an der Matrizenplatte 5 und den Behälter 22 an der Ablaufrutsche 18 gesammelt, und über die Rückleitungen 23 und 28 zusammen mit den Rückständen aus dar Zwischenkammer 11 über die Rückleitung 24 in den Wasser/Schlammbehälter 29 geleitet.

Der Wasserbehälter 29 mit schrägem Boden umfaßt ein Volumen von beispielsweise 100 bis 200 l und ist durch eine herausnehmbares Zwischenblech 31 geteilt. Die eine Hälfte dient der Schlammablage, in der anderen Hälfte ist ein Filter 37 zur Wasserreinigung und ein Schwimmschalter 30 angebracht. Der Schwimmschalter 30 überwacht in Verbindung mit einer optischen Anzeige den min/max Pegel im Behälter. Bei min wird die Presse gestoppt, bei max wird über eine Entsorgungsleitung 36 wieder bis auf den Normalstand abgepumpt.

Der Metallschlamm kann über ein Handventil 32 abgelassen und dem Produktionsprozeß wieder zugeführt werden.

Die erfindungsgemäße Vorrichtung zur Herstellung von Tabletten aus Metallpulvern ist dadurch gekennzeichnet, daß das Metallpulver in Form einer Suspension in einer Flüssigkeit vorliegt und die Tabletten durch Naßverpreßen der Suspension in einer nassen Betriebsumgebung hergestellt werden, wobei eine Exzenterpresse 1 mit einem Füllschuh 12, einer Tablettenablaufrutsche 18 und einer Steuerung versehen ist und die Abstände zwischen der Wandung einer Innenbohrung der Matrize 6 und den Mantelflächen das entsprechenden Ober- und Unterstempels der Metallpulver-Suspension angepaßt sind.

Besondere Ausführungsformen der erfindungsgemäßen Vorrichtungen sind in den Ansprüchen 5 bis 10 angegeben.

Das erfindungsgemäße Verfahren und die erfindungsgemäße Vorrichtung haben eine Reihe von Vorteilen. Damit können Metallpulver, insbesondere Katalysatoren vom Raney-Typ, auf einfache Weise in eine Form gebracht werden, die deren Einsatz in katalytischen Rieselphase- und Gasphaseverfahren ermöglicht. Die pro Zeiteinheit herstellbare Menge an Tabletten aus Metallpulver ist sehr hoch. Die so erhaltenen Tabletten bedürfen keiner separaten Nachreinigung zur Entfernung von lockeren Pulveranteilen. Es wird viel weniger Frischwasser benötigt, als bei herkömmlichen Naßverpressungen. Die Tabletten fallen in reproduzierbarer, gleichmäßiger und steuerbarer Qualität an. Von den zu tablettierenden Metallpulvern gerät praktisch nichts in die Abwässer und in die Umwelt. Im Gegensatz zu bisherigen Verfahren, bei denen maximal etwa 50 % des eingesetzten Metallpulvers in Tablettenform erhalten werden können, kann man erfindungsgemäß praktisch 100 % des eingesetzten Metallpulvers in Tablettenform bringen, wobei, ebenfalls im Gegensatz zu bekannten Verfahren, die Tablettenkenngrößen (z.B. deren Festigkeit, innere Oberfläche, Porosiät und Bohrenvolumen) von Einzeltablette zu Einzeltablette und von Charge zu Charge nur sehr wenig variieren.

Die vorliegende Erfindung betrifft auch die Verwendung erfindungsgemäß hergestellter Tabletten aus Metallpulver als Katalysatoren in Rieselphase- und Gasphaseverfahren. Beispiele für die Verwendung solcher Katalysatoren sind Hydrierungen, Abgasreinigungen, Dehydrierungen, Isomerisierungen, die Fischer-Tropsch-Synthese, die Herstellung von Alkoholen aus Kohlenmonoxid und Wasserstoff und die Herstellung von Aminen.

Beispiele für Hydrierungen sind die Hydrierung von Nitroverbindungen zu den entsprechenden Aminen, von Nitrilen zu den entsprechenden Aminen, von Zuckern zu den entsprechenden Zuckeralkoholen, von höheren Aldehyden und Ketonen zu den entsprechenden Alkoholen, von gegebenenfalls substituierten Nitronaphthalinsulfonsäuren zu den entsprechenden Aminonaphthalinsulfonsäuren, von Phenylringen zu Cyclohexanringen (z.B. von Anilin zu Cyclohexylamin), von olefinischen oder acetylenischen Mehrfachbindungen zu gesättigten oder weniger ungesättigten Bindungen und die Hydrierung von Estern zu Alkoholen. Beispiele für Abgasreinigungen sind die Reinigung Ethylenoxid enthaltender Abgase unter Bildung von Ethanol und die Reinigung Formaldehyd enthaltender Abgase unter Bildung von Methanol. Ein Beispiel für die Herstellung von Aminen ist deren Herstellung aus Alkoholen und Ammoniak. Ein Beispiel für Isomerisierungen ist die Umwandlung von Isobuten in Buten-1. Beispiele für Dehydrierungen sind die Dehydrierung von Aminen zu Nitrilen, von Alkoholen zur Aldehyden oder Ketonen, von Cyclohexanringen zu Phenylringen und von gesättigten Einfachbindungen zu ungesättigten Mehrfachbindungen.

In den folgenden Beispielen beziehen sich Prozentangaben auf das Gewicht, falls nicht anderes angegeben ist.

## Beispiele

### Beispiel 1

Es wurde mit der Exzenterpresse gearbeitet, die oben bei der Beschreibung von Fig. 1 detailliert geschildert wurde. Eingesetzt wurde eine Suspension von Raney-Nickel in Wasser, wobei das Raney-Nickel aus einer Legierung erhalten worden war, die 50 Gew.-% Aluminium und 50 Gew.-% Nickel enthielt. Das Raney-Nickel wies eine Korngröße von $\leq 80$ $\mu$m auf. Das Preßwerkzeug war ein 50-fach Preßwerkzeug für die Herstellung von Tabletten mit einer Höhe von 50 mm, einem Durchmesser von 5 mm und einer flachen Facette, das mit einem Preßdruck von max. 500 kN betrieben wurde.

Die hergestellten Tabletten wiesen folgende Parameter auf:

```
Wahre Dichte (He):                              6.942 g/cm³
Scheinbare Dichte (Hg):                         3.636 g/cm³
Ges. Porenvolumen (2Å - 13 µm):                 131,0 mm³/g
Hg-Porenvolumen (37,5Å - 13 um):                131,0 mm³/g
Feinporenvolumen (2Å - 37,5 Å):                   0,0 mm³/g
spez. Ges. Oberfläche N₂ (BET):                  48,90 m²/g
spez. Ges. Hg. Porenoberfläche:                   5,53 m²/g
Porosität für Porendurchm. unter 13 µm:         47,63 %
mittlerer Porendurchmesser:                     107,1 Å
Schüttgewicht:                                    2,47 kg/l
Bruchhärte auf der Mantelfläche:                215 N/Tablette
```

Beispiel 2

Es wurde verfahren wie in Beispiel 1, jedoch wurde das Preßwerkzeug mit einem Preßdruck von max. 400 kN betrieben.

Die so hergestellten Tabletten wiesen folgende Parameter auf:

```
Wahre Dichte (He):                              6.974 g/cm³
Scheinbare Dichte (Hg):                         4.081 g/cm³
Ges. Porenvolumen (2Å - 13 µm):                 101,7 mm³/g
Hg-Porenvolumen (37,5Å - 13 um):                 87,2 mm³/g
Feinporenvolumen (2Å - 37,5 Å):                  14,5 mm³/g
spez. Ges. Oberfläche N₂ (BET):                  28,00 m²/g
spez. Ges. Hg. Porenoberfläche:                  14,56 m²/g
Porosität für Porendurchm. unter 13 µm:         41,48 %
mittlerer Porendurchmesser:                     145,2 Å
Schüttgewicht:                                    2,41 kg/l
Bruchhärte auf der Mantelfläche:                132 N/Tablette
```

Beispiel 3

Ein senkrecht stehendes, wärmeisoliertes Hochdruckrohr aus nichtrostendem Stahl von 45 mm Innendurchmesser und 1 m Länge wurde mit 1,4 l eines durch Tablettierung wie in Beispiel 1 beschrieben hergestellten Raney-Nickel-Katalysators gefüllt. Durch dieses Rohr wurden gemeinsam mit der dreifachen molaren Menge von unter einem Druck von 300 bar stehendem hochreinen Wasserstoff stündlich 140 ml einer 50 %-igen Lösung von α-D-Glykopyranosido-1,6-fructose in entionisiertem sauerstofffreiem Trinkwasser, die auf einen pH-Wert von 6,0 eingestellt wurde, kontinuierlich von unten nach oben aufsteigend gepumpt.

Die wäßrige Lösung und der Wasserstoff wurden durch einen Wärmeaustauscher geführt und erhitzt, so daß sie in das Hochdruckrohr mit einer Temperatur von 80°C eintraten. Das das Hochdruckrohr verlassende Gemisch von wäßriger Lösung und überschüssigem Wasserstoff wurde über einen Kühler in einen Abscheider geführt, von wo der Wasserstoff nach Ersatz der verbrauchten Menge wieder zusammen mit noch nicht hydrierter Lösung in den Vorwärmer und von da erneut in das Hochdruckrohr gepumpt wurde.

Die klare, wäßrige Lösung wurde entspannt, über ein Feinfilter filtriert, in einem Fallfilmverdampfer auf einen Zuckeralkoholgehalt von 80 % aufkonzentriert und anschließend in einem Vakuumkristaller zur vollständigen Kristallisation gebracht. Das erhaltene feine Kristallpulver bestand aus einem Gemisch von $\alpha$-D-Glukopyranosido-1,6-mannit und $\alpha$-D-Glykopyranosido-1,6-sorbit im Verhältnis von 1:1 i.T., der Wassergehalt lag bei 5 %. Das Gemisch der beiden stereoisomeren Zuckeralkohole war ansonsten hochrein (Reinheitsgrad über 99,6 %). Der Gehalt an nichthydrierter $\alpha$-D-Glukopyranosido-1,6-fructose lag bei unter 0,1 %, ebenso der Gehalt an Sorbit. Mannit konnte nicht nachgewiesen werden. Der Katalysator war auch nach einer Laufzeit von 12.000 h unverändert wirksam. Das entsprach einem Katalysatorverbrauch von weniger als 0,15 %/kg hydrierter Substanz.

Beispiel 4

In einem Hochdruckrohr wie in Beispiel 3 beschrieben wurde bei einer Temperatur von 115°C und einem Wasserstoffdruck von 300 bar in gleicher Weise wie in Beispiel 3 beschrieben eine wäßrige Lösung von $\alpha$-D-Glukopyranosido-1,6-fructose hydriert, die einen pH-Wert von 5,5 aufwies. Der Katalysator war durch Tablettierung eines Raney-Nickel-Eisen-Katalysators, der als wäßriger Metallschlamm vorlag, wie in Beispiel 1 beschrieben, erhalten worden. Der Raney-Katalysator enthielt 15 % Eisen. Die Tabletten hatten die bei Beispiel 1 angegebenen geometrischen Maße, eine Druckfestigkeit von 138 N/Tablette und eine innere Oberfläche von 63 m$^2$/g.

Das in dem Vakuumkristaller gewonnene Gemisch aus $\alpha$-D-Glukopyransido-1,6-mannit und -sorbit hatte eine Reinheitsgrad von 99,3 %. Der Gehalt an nicht umgesetzter $\alpha$-D-Glykopyranosido-1,6-fructose lag bei 0,1 %. Der Sorbit-Gehalt betrug 0,1 %. Der Mannit-Anteil betrug 0,01 %. Der Katalysator war nach einer Laufzeit von 8.000 h noch unverändert wirksam.

Beispiel 5

In einem Hochdruckrohr wie in Beispiel 3 wurde bei einer Temperatur von 105°C und einem Wasserstoffdruck von 200 bar in gleicher Weise wie in Beispiel 3 eine wäßrige Lösung von $\alpha$-D-Glykopyranosido-1,6-fructose hydriert, die einen pH-Wert von 6,0 aufwies. Der Katalysator war durch Tablettierung eines Raney-Nickels-Kobalt-Katalysators, der als wäßriger Metallschlamm vorlag, wie in Beispiel 2 beschrieben, gewonnen worden. Der Raney-Katalysator enthielt 10 % Kobalt. Die Tabletten hatten die in Beispiel 1 angegebenen geometrischen Abmessungen, eine Druckfestigkeit von 137 N/Tablette und eine innere Oberfläche von 29 m$^2$/g.

Das in einem Vakuum-Drehrohr gewonnene Gemisch von $\alpha$-D-Glykopyranosido-1,6-mannit und -sorbit hatte einen Reinheitsgrad von 99,2 %. Der Gehalt an nicht umgesetzter $\alpha$-D-Glykopyranosido-1,6-fructose lag bei 0,3 %. Der Sorbit-Gehalt betrug 0,15 %. Mannit lies sich nicht nachweisen. Der Katalysator war nach einer Laufzeit von 1.000 h noch unvermindert wirksam.

Beispiel 6 (Vergleichsbeispiel)

Durch ein Hochdruckrohr wie in Beispiel 3 beschrieben wurde bei einer Temperatur von 100°C und einem Wasserstoffdruck von 300 bar in gleicher Weise wie in Beispiel 3 eine wäßrige Lösung von $\alpha$-D-Glykopyranosido-1,6-frustose hydriert, die einen pH-Wert von 6,0 aufwies.

Der Katalysator wurde durch Auftrag einer wäßrigen Nickelsalz-Lösung auf einen inerten kugelförmigen Aluminiumoxid-Träger (Durchmesser 5 mm) und nachfolgender Überführung des Nickels in den metallischen Zustand durch Reduzierung im Wasserstoffstrom hergestellt. Der Nickelgehalt des Katalysators lag bei 18 %. Die innere Oberfläche des Katalysators lag bei 65 m$^2$/g und entsprach somit in etwa der Oberfläche der in den Beispielen 3 bis 5 eingesetzten Katalysatoren. Das in einem Vakuumkristaller gewonnene Gemisch von $\alpha$-D-Glykopyranosido-1,6-mannit und -sorbit hatte einen Reinheitsgrad von 91,9 %. Der Gehalt an nicht umgesetzter $\alpha$-D-Glykopyranosido-1,6-fructose lag bei 1,7 %. Der Sorbit- und Mannit-Gehalt lag 0,3 %. Zusätzlich wurden unbekannte Verunreinigungen in einer Höhe von 6,1 % festgestellt. Damit kann das so erhaltene Reaktionsprodukt nicht als Zuckeraustauschstoff eingesetzt werden.

Ferner wurde schon nach einer Laufzeit von 600 h ein Nachlassen der Katalysatoraktivität beobachtet. Durch eine Erhöhung der Reaktionstemperatur von 100 auf 120° konnte zwar der Anteil an nicht umgesetzter $\alpha$-D-Glykopyranosido-1,6-fructose auf einen Wert von 0,5 % gesenkt werden, gleichzeitig stieg aber der Anteil an unbekannten Verunreinigungen auf 6,4 % an.

**Patentansprüche**

1. Verfahren zur Herstellung von Tabletten aus Metallpulver durch Verpressen auf Tablettiermaschinen, dadurch gekennzeichnet, daß das zu verarbeitende Pulver in Form einer Suspension in einer Flüssigkeit vorliegt und die Tabletten durch Naßverpressen der Suspension in einer nassen Betriebsumgebung hergestellt werden.

2. Verfahren nach Anspruch 1, dadurch gekennzeichnet, daß als Flüssigkeit Wasser eingesetzt wird.

3. Verfahren nach Anspruch 2, dadurch gekennzeichnet, daß Raney-Katalysatoren in wäßriger Suspension eingesetzt werden.

4. Vorrichtung zur Herstellung von Tabletten aus Metallpulver-Suspensionen, bestehend aus einer Presse (1) mit einem Füllschuh (12) und einer Tablettenabführung (18), dadurch gekennzeichnet, daß die Vorrichtung Einrichtungen zum Einstellen einer nassen Verarbeitungsumgebung aufweist.

5. Vorrichtung nach Anspruch 4, dadurch gekennzeichnet, daß die Abstände zwischen der Wandung der Innenbohrung der Matrize (6) und den Mantelflächen des entsprechenden Ober- und Unterstempels (4,10) der Presse (1) eine der Metallpulver-Suspension angepaßte Größe aufweisen.

6. Vorrichtung nach den Ansprüchen 4 - 5, dadurch gekennzeichnet, daß ein integrierter Sprüh- und Spülwasserkreislauf, bestehend aus einer Wasserpumpe (33), einem Wasser/Schlamm-Behälter (29), einer Sprühdüsensteuerung (34), mehreren Sprühdüsen und Schlamm- und Spülwasserrückführungen zur Einstellung der nassen Verarbeitungsumgebung vorhanden ist.

7. Vorrichtungen nach den Ansprüchen 4 - 6, dadurch gekennzeichnet, daß der Wasser/Schlamm-Behälter (29) eine Trennvorrichtung zur Trennung von Spülwasser und Schlamm aufweist.

8. Vorrichtung nach den Ansprüchen 4 - 7, dadurch gekennzeichnet, daß der gesamte Verarbeitungsbereich der Tablettiermaschine durch Führungselemente und Dichtungen vor der flüssigen Phase der Metallpulver-Suspension geschützt ist.

9. Vorrichtung nach den Ansprüchen 4 - 8, dadurch gekennzeichnet, daß die Vorrichtung Sprühdüsen zur ständigen Säuberung der Bereiche Füllschuh (12), Matrizenplatte (5), Zwischenkammer (11) und Tablettenablaufrutsche (18) aufweist.

10. Vorrichtung nach den Ansprüchen 4 - 9, dadurch gekennzeichnet, daß die Tablettenabführung (18) eine Vorreinigungsstufe (19), eine Staustrecke und eine Endreinigungsstufe (20) mit Vibrator (21) aufweist.

11. Vorrichtung nach den Ansprüchen 4 - 10, dadurch gekennzeichnet, daß die Presse (1) eine Messeinrichtung zum Bestimmen von während des Pressvorganges auftretenden Kräften (Oberstempel-/Unterstempelkraft, Ausstoßkraft) und eine damit verbundene Steuerung aufweist, die den Pressvorgang in der obersten Unterstempel-Position abbricht.

12. Verwendung von Katalysatortabletten, hergestellt nach Anspruch 1 in Rieselphase- und/oder Gasphaseverfahren.

13. Verwendung nach Anspruch 12, dadurch gekennzeichnet, daß es sich um Hydrierungen, Abgasreinigungen, Dehydrierungen, Isomerisierungen, die Fischer-Tropsch-Synthese, die Herstellung von Alkoholen oder die Herstellung von Aminen handelt.

## Claims

1. A process for the production of pellets of metal powder by press-moulding in pelleting machines, characterized in that the powder to be processed is in the form of a suspension in a liquid and the pellets are produced by wet pressing of the suspension in a wet operating environment.

2. A process as claimed in claim 1, characterized in that water is used as the liquid.

3. A process as claimed in claim 1, characterized in that Raney catalysts in aqueous suspension are used.

4. An apparatus for the production of pellets of metal powder suspensions consisting of a press (1) with a filling shoe (12) and a pellet discharge chute (18), characterized in that the apparatus comprises means for establishing a wet processing environment.

5. An apparatus as claimed in claim 4, characterized in that the intervals between the wall of the inner bore of the cavity (6) and the surfaces of the corresponding top and bottom punches (4,10) of the press (1) have a size adapted to the metal powder suspension.

6. An apparatus as claimed in claims 4 to 5, characterized in that an integrated spray and rinsing water circuit consisting of a water pump (33), a water-sludge container (29), a spray nozzle control (34), several spray nozzles and sludge and rinsing water return pipes is present for establishing the wet processing environment.

7. An apparatus as claimed in claims 4 to 6, characterized in that the water/sludge container (29) comprises a separator for separating rinsing water and sludge.

8. An apparatus as claimed in any of claims 4 to 7, characterized in that the entire processing area of the pelleting machine is protected from the liquid phase of the metal powder suspension by guide elements and seals.

9. An apparatus as claimed in claims 4 to 8, characterized in that it comprises spray nozzles for permanently cleaning the filling shoe (12), cavity plate (5), intermediate chamber (11) and pellet discharge chute (18) areas.

10. An apparatus as claimed in claims 4 to 9, characterized in that the pellet discharge chute (18) comprises a preliminary cleaning stage (19), a collecting zone and a final cleaning stage (20) with a vibrator (21).

11. An apparatus as claimed in claims 4 to 10, characterized in that the press (1) comprises a measuring unit for determining forces occurring during pelleting (top punch/bottom punch force, ejection force) and a control system connected thereto which interrupts the pelleting process in the uppermost position of the bottom punch.

12. The use of catalyst pellets produced by the process claimed in claim 1 in trickle-phase and/or gas-phase process applications.

13. The use claimed in claim 12, characterized in that the applications in question arc hydrogenations, emission control, dehydrogenations, isomerizations, Fischer-Tropsch synthesis, the production of alcohols or the production of amines.

## Revendications

1. Procédé de préparation de comprimés de poudres métalliques par compression sur des machines à comprimer, caractérisé en ce que la poudre métallique à transformer est sous la forme d'une suspension dans un liquide et on produit les comprimés par compression à l'état humide de la suspension dans un environnement de service humide.

2. Procédé selon la revendication 1, caractérisé en ce qu'on utilise l'eau comme liquide.

3. Procédé selon la revendication 2, caractérisé en ce qu'on utilise des catalyseurs Raney en suspension aqueuse.

4. Dispositif de production de comprimés à partir de suspensions de poudres métalliques, constitué d'une presse (1) avec un sabot de remplissage (12) et une goulotte de sortie des comprimés (18), caractérisé en ce que le dispositif comprend des équipements pour ajuster un environnement de transformation à l'état humide.

5. Dispositif selon la revendication 4, caractérisé en ce que les écartements entre la paroi des trous internes de la matrice (6) et les enveloppes des poinçons supérieurs et inférieurs correspondants (4, 10) de la presse (1) présentent une taille adaptée à la suspension de poudres métalliques.

6. Dispositif selon les revendications 4-5, caractérisé en ce qu'il existe un circuit d'eau de pulvérisation et de rinçage intégré, constitué d'une pompe à eau (33), d'un réservoir d'eau et de boue (29), d'une commande de buses de pulvérisation (34), de plusieurs buses de pulvérisation et de recyclage de boue et d'eau de rinçage pour établir un environnement de service humide.

7. Dispositifs selon les revendications 4-6, caractérisés en ce que le réservoir d'eau et de boue (29) présente un dispositif de séparation pour séparer l'eau de rinçage de la boue.

8. Dispositif selon les revendications 4-7, caractérisé en ce que tout le domaine de transformation de la machine de compression est protégé par des éléments de guidage et des joints vis-à-vis de la phase liquide de suspension de poudres métalliques.

9. Dispositif selon les revendications 4-8, caractérisé en ce que le dispositif comporte des buses de pulvérisation pour nettoyer en permanence les domaines du sabot de remplissage (12), de la plaque de matrice (5), de la chambre intermédiaire (11) et de la goulotte de sortie de comprimés (18).

10. Dispositif selon les revendications 4-9, caractérisé en ce que la goulotte de sortie des comprimés (18) présente un étage de prénettoyage (19), une piste d'accumulation et un étage de nettoyage final (20) avec vibrateur (21).

11. Dispositif selon les revendications 4-10, caractérisé en ce que la presse (1) présente un dispositif de mesure pour déterminer les forces mises en jeu pendant le processus de compression (force poinçon supérieure/poinçon inférieur, force d'éjection) et une régulation qui lui est reliée, qui interrompt le processus de compression quand le poinçon inférieur est en position supérieure.

12. Utilisation des comprimés de catalyseurs préparés selon la revendication 1 dans des procédés en phase gazeuse et/ou en phase ruisselante.

13. Utilisation selon la revendication 12, caractérisée en ce qu'il s'agit d'hydrogénations, de purification de fumées, de déshydrogénations, d'isomérisations, de la synthèse Fischer-Tropsch, de la production d'alcools et de la production d'amines.

FIG. 1